# EUROPEAN PATENT APPLICATION

(11) **EP 1 691 460 A1**
(43) Date of publication of application: **16.08.2006**
(21) Application number: 06250775.1
(22) Date of filing: 14.02.2006
(51) Int. Cl.: H02G 3/32

(54) **Cable clip**

(30) Priority: 14.02.2005 US 58575
(71) Applicant: Belkin Corporation, Compton, CA 90220 (US)
(72) Inventor: Tan, William, Alhambra California 91803 (US); Mori, Kenneth, Los Angeles California 90065 (US); Wadworth, John, Los Angeles California 90027 (US)
(74) Representative: Lawrence, John

(57) **Abstract**

A cable clip includes a first channel (110) capable of receiving a first cable and a second channel (120) capable of receiving a second cable. The first channel includes a first sidewall (111), a second sidewall (112), and a first segment (113) bridging the first sidewall and the second sidewall. The second channel includes the second sidewall, a third sidewall (121), and a second segment (123) bridging the second sidewall and the third sidewall. At least one of the first and second channels includes an identification region (130). A window (140) may be provided in at least one of the channels. The walls of the clip form an S-shaped body.

## Description

### FIELD OF THE INVENTION

This invention relates generally to cable management and organization, and relates more particularly to a clip having cable management features.

### BACKGROUND OF THE INVENTION

The number of cables required by computers and other electronic devices can make cable management a difficult problem. Most electronic devices require at least a power cable, and many also require additional cables to transmit data, receive data, and/or perform other functions. These cables often get twisted together, thus producing a tangled, cluttered, and disorganized mess at or near the work area. A further problem is the difficulty with which a particular cable can be identified from among the group of all cables. Straps designed to bundle cables together have been developed in an attempt to address these issues, but these straps do nothing to solve the cable identification problem, and are less than desirable even for cable management because they simply transform the cable mess from randomly to linearly oriented. Accordingly, there exists a need for a cable management device that both organizes and helps in the identification of cables.

### BRIEF DESCRIPTION OF THE DRAWINGS

The invention will be better understood from a reading of the following detailed description, taken in conjunction with the accompanying figures in the drawings in which:
FIG. 1 is a perspective view of a cable clip according to an embodiment of the invention;
FIG. 2 is a perspective view of the cable clip of FIG. 1, as seen from a different angle than the angle of FIG. 1;
FIG. 3 is a front view of a cable clip according to another embodiment of the invention;
FIG. 4 is a front view of a cable clip according to yet another embodiment of the invention;
FIG. 5 is a front view of a cable clip according to still another embodiment of the invention;
FIG. 6 is a front view of a cable clip according to another embodiment of the invention;
FIG. 7 is a front view of a cable clip according to yet another embodiment of the invention; and
FIG. 8 is a flow chart illustrating a method of manufacturing a cable clip according to an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner.

### DETAILED DESCRIPTION OF THE DRAWINGS

In one embodiment of the invention, a cable clip comprises a first channel capable of receiving a first cable and a second channel capable of receiving a second cable. The first channel comprises a first sidewall, a second sidewall, and a first segment bridging the first sidewall and the second sidewall. The second channel comprises the second sidewall, a third sidewall, and a second segment bridging the second sidewall and the third sidewall. At least one of the first and second channels comprises an identification region.

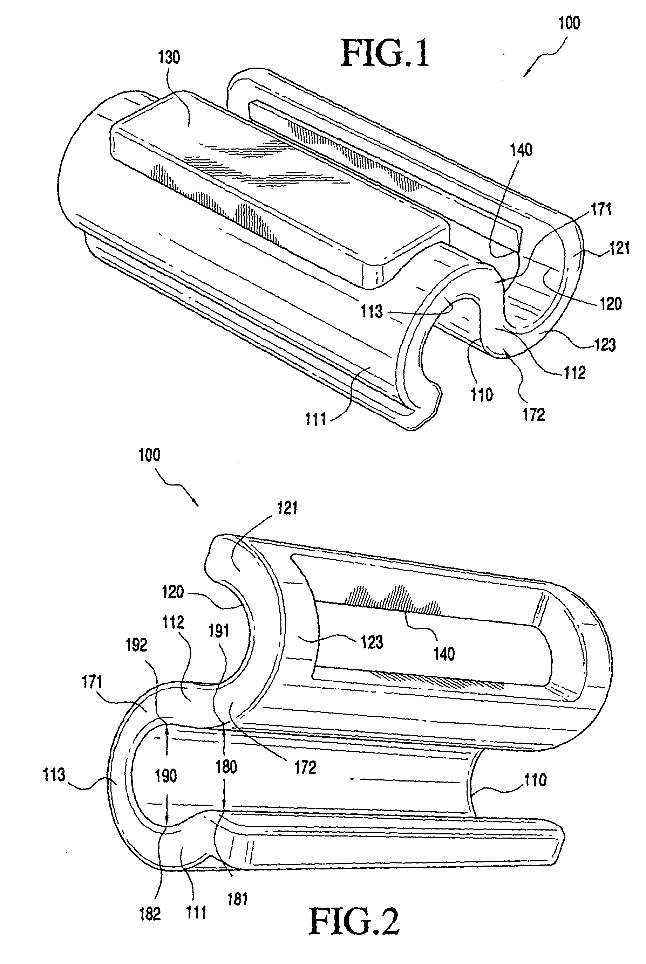

FIG. 1 is a perspective view of a cable clip 100 according to an embodiment of the invention. As illustrated in FIG. 1, cable clip 100 comprises a channel 110 capable of receiving a first cable (not shown in FIG. 1) and a channel 120 capable of receiving a second cable (also not shown in FIG. 1). Channels 110 and 120, as well as any of the channels described subsequently herein, are, in certain embodiments of the invention, capable of receiving more than one cable. As is also illustrated, cable clip 100 is elongated so as to wrap around a portion of the length of the cable. A length for cable clip 100 of between approximately one and three inches is appropriate and works well, but lengths outside of that range also work well, and are also contemplated herein. As further illustrated, channels 110 and 120 are open channels, meaning that the channels do not completely surround or enclose the cable they contain. Instead, an opening or gap through which a cable may be inserted or removed runs along the entire length of the channels. Cable clip 100 may be constructed of Acrylonitrile Butadiene Styrene (ABS) or a similar material.

Channel 110 comprises a sidewall 111, a sidewall 112, and a segment 113 bridging sidewall 111 and sidewall 112. Channel 120 comprises sidewall 112, a sidewall 121, and a segment 123 bridging sidewall 112 and sidewall 121. Sidewall 112 separates channel 110 from channel 120, thereby separating the first cable from the second cable by maintaining a space between them. This cable separation is one of the cable management advantages made possible by cable clip 100, in that it both presents the cables in an aesthetically pleasing manner, and also makes the cables easy to distinguish from each other along the cables' entire lengths. This latter advantage becomes very beneficial when, for example, a particular cable is to be removed from the electronic device and/or the electrical outlet. Additional advantages also flow from the cable separation, including, for example, a decreased likelihood that the cables will be twisted or bent, either of which could result in damage to the cables.

Cable clip 100 further comprises an identification region 130. FIG. 1 depicts an embodiment in which identification region 130 is a part of, or is adjacent to, segment 113 of channel 110. In a particular embodiment, identification region 130 comprises a surface suitable for the attachment of a label. In that or another embodiment, identification region 130 is a substantially flat, smooth surface, segment 113 has a curvature, i.e., has a curved surface, and identification region 130 does not conform to or follow the curvature of segment 113. In one manifestation of that embodiment, identification region 130 is built up so as to be raised above segment 113, as depicted in FIG. 1. In a different, non-illustrated manifestation, identification region 130 is recessed below segment 113 such that it is inset within channel 110.

In another particular embodiment, identification region 130 comprises a writable surface, or in other words, a surface capable of being written on with a marker, a pen, a pencil, or another writing implement, and further capable of retaining what is written in a legible manner. In that embodiment, identification region 130 can be substantially flat and can be raised above or set below segment 113, as with one or more of the embodiments mentioned previously, but may differ in how smooth it is. More particularly, to be suitable as a writable surface, identification region 130 should be slightly rough, as known in the art, so as to absorb and retain the ink or other writing fluid that is applied. In one embodiment, identification region 130 comprises a matte surface or finish that is well-suited for receiving ink. In the same or another embodiment, a solid field of white or other light color is screen printed onto identification region 130. The white field offers a sharp contrast to dark ink that may subsequently be applied to identification region 130, and makes any writing on identification region 130 easily readable.

Cable clip 100 still further comprises a window 140. In the illustrated embodiment, portions of sidewall 121 and segment 123 enclose window 140, such that window 140 is a part of channel 120. Window 140 increases the flexibility of cable clip 100, and in particular, increases the flexibility of that portion, here channel 120, of cable clip 100 in which window 140 is located. Because channels 110 and 120 must flex slightly in order to admit the passage of a cable to be held within them, increased flexibility leads to increased ease of use for cable clip 100. The size of window 140 may be varied in order to control the degree of flexibility: a larger window for a looser fit and easier cable insertion and removal; a smaller window for a stiffer feel and more difficult cable insertion and removal.

As mentioned above, the illustrated embodiment has window 140 in channel 120. This arrangement offers a cable clip having one channel-channel 120-at which the insertion and removal of a cable is relatively easy, and another channel-channel 110-at which the same tasks are relatively difficult. This may be desirable when, for example, it is anticipated that one cable will be left in cable clip 100 on a more permanent basis while another cable will need to be removed and re-inserted into cable clip 100 with some frequency. In one manifestation of the embodiment under discussion, cable clip 100 is permanently attached to a cable either as part of or following the manufacturing process. In that manifestation, if desired, an indication of the name and/or the function of the permanently-attached cable may be applied to identification region 130. The result would be a dedicated cable having thereon a clip in which one or more additional cables could be stored, managed, and/or identified. The permanently-attached cable could either be fixed at a single location along the length of the cable, or it could be slidably attached to the cable such that it could from one portion of the cable to another but could not be removed from the cable.

Different patterns of anticipated use may lead to different embodiments for cable clip 100. As an example, in a non-illustrated embodiment, cable clip 100 comprises window 140 on channel 120 and a feature similar to window 140 on channel 110, such that both channels 110 and 120 offer relatively easy insertion and removal of cables. This non-illustrated embodiment may be suitable when it is anticipated that both channels will house cables that will need to be frequently removed and re-inserted. As another, non-illustrated, example, where it is anticipated that both cables will be kept within their respective channels on a more permanent basis, window 140 and any similar feature may be omitted from both channels.

Window 140 offers other advantages in addition to the features and functions already described. As an example, with reference still to FIG. 1, window 140 exposes a portion of the cable housed within channel 120, thus making visible an increased percentage of the cable. Such increased visibility may be desirable, for example, when the cable has writing or other markings to which a user of cable clip 100 needs to refer. As another example, window 140 offers an attachment point for a strap or tie (not shown in FIG. 1) suitable for attaching cable clip 100 to a table leg or other location near the area where cable clip 100 is to be used. Attaching cable clip 100 to a table leg or other location in this manner is another cable management ability made possible by cable clip 100.

In the embodiment illustrated in FIG. 1, sidewall 112 comprises an end 171 and an end 172 opposite end 171. Segment 113 is adjacent to end 171 of sidewall 112, and segment 123 is adjacent to end 172 of sidewall 112. The result is the S-Clip, i.e., the cable clip shaped like a letter S, shown in FIG. 1. Some alternative configurations for the cable clip are depicted subsequent figures, and are described below.

FIG. 2 is a perspective view of cable clip 100 according to an embodiment of the invention. FIG. 2 shows cable clip 100 from an angle different from that of FIG. 1. As illustrated in FIG. 2, sidewall 111 of channel 110 comprises a portion 181 and a portion 182. Portion 182 is located between portion 181 and segment 113. Similarly, sidewall 112 comprises a portion 191 and a portion 192, with portion 192 located between portion 191 and segment 113. Note that end 172, first mentioned above, of sidewall 112 is located at or near portion 191 of sidewall 112, and in at least one embodiment end 172 and portion 191 may be considered to overlap, either partially or completely. Note further that end 171 of sidewall 112 is located at or near portion 192 of sidewall 112, and in at least one embodiment end 171 and portion 192 may also be considered to overlap, either partially or completely.

Portion 181 of sidewall 111 and portion 191 of sidewall 112 are separated by a distance 180. Portion 182 of sidewall 111 and portion 192 of sidewall 112 are separated by a distance 190. In the illustrated embodiment, distance 180 is less than distance 190. This configuration permits channel 110 to securely hold a cable therein. The same configuration allows channel 110 to hold cables of various gauges, diameters, dimensions, and shapes, including cables having cross sections that are round, oblong, tear-drop shaped, or that have some other regular or irregular geometry, all in a variety of sizes.

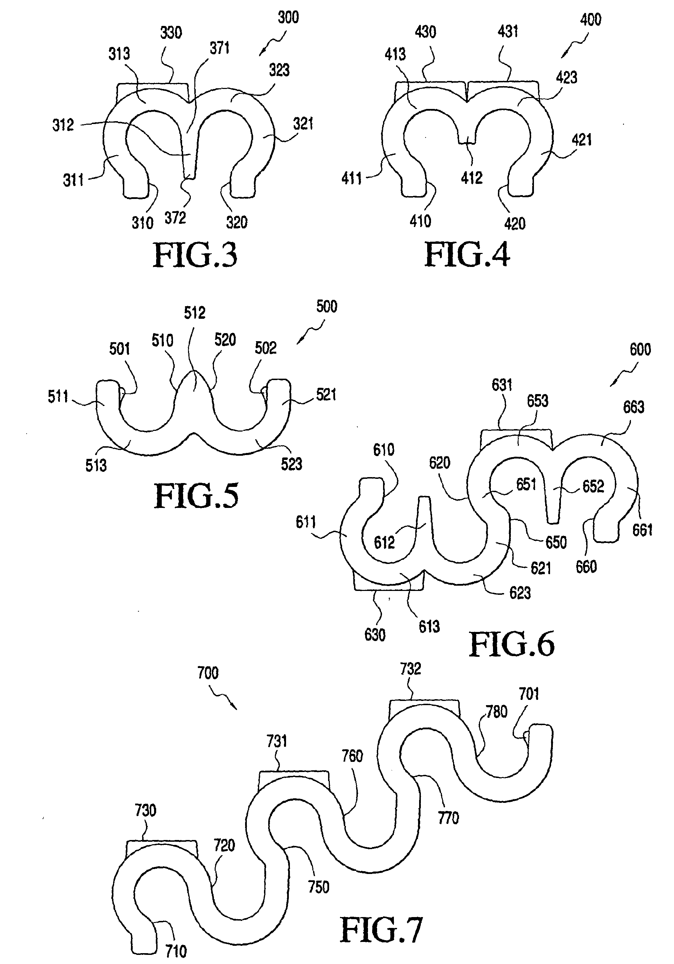

FIGs. 3-5 are simplified front views of additional cable clips according to additional embodiments of the invention. FIG. 3 is a front view of a cable clip 300. FIG. 4 is a front view of a cable clip 400. FIG. 5 is a front view of a cable clip 500.

Cable clip 300 comprises a channel 310 capable of receiving a first cable (not shown) and a channel 320 capable of receiving a second cable (also not shown). Channel 310 comprises a sidewall 311, a sidewall 312, and a segment 313 bridging sidewall 311 and sidewall 312. Channel 320 comprises sidewall 312, a sidewall 321, and a segment 323 bridging sidewall 312 and sidewall 321. Cable clip 300 further comprises an identification region 330. As an example, channel 310, sidewalls 311 and 312, segments 313 and 323, and identification region 330 can be similar to, respectively, channel 110, sidewalls 111 and 112, segments 113 and 123, and identification region 130, all of which were first shown in FIG. 1. As illustrated, channel 320 is also similar to channel 110, and sidewall 321 is similar to sidewall 111. Accordingly, in the illustrated embodiment, both channels 310 and 320, like channel 110, have a narrower portion that opens into a wider portion.

A difference between cable clip 100, first shown in FIG. 1, and cable clip 300 of FIG. 3 is in the configuration of the channels with respect to each other. As illustrated in FIG. 3, sidewall 312 comprises an end 371 and an end 372 opposite end 371, and both segment 313 and segment 323 are adjacent to end 371 of sidewall 312. The result is a cable clip shaped like a letter M (or like a letter W, a letter E or a number 3, depending on the cable clip's orientation).

Referring to FIG. 4, cable clip 400 comprises a channel 410 capable of receiving a first cable (not shown) and a channel 420 capable of receiving a second cable (also not shown). Channel 410 comprises a sidewall 411, a sidewall 412, and a segment 413 bridging sidewall 411 and sidewall 412. Channel 420 comprises sidewall 412, a sidewall 421, and a segment 423 bridging sidewall 412 and sidewall 421. Cable clip 400 further comprises an identification region 430 and an identification region 431. As an example, channel 410, sidewalls 411 and 412, segments 413 and 423, and identification regions 430 and 431 can be similar to, respectively, channel 110, sidewalls 111 and 112, segments 113 and 123, and identification region 130, all of which were first shown in FIG. 1. As illustrated, channel 320 is also similar to channel 110, and sidewall 321 is similar to sidewall 111. Accordingly, in the illustrated embodiment, both channels 310 and 320, like channel 110, have a narrower portion that opens into a wider portion.

It was already mentioned that cable clip 400 comprises two identification regions, rather than the single identification region illustrated in FIG. 1 in connection with cable clip 100 and in FIG. 3 in connection with cable clip 300. A further difference between cable clip 400 and cable clip 300 is the fact that sidewall 412 is shorter and does not separate channels 410 and 420 to the same extent that sidewall 312 separates channels 310 and 320 (see FIG. 3).

Referring now to FIG. 5, cable clip 500 comprises a channel 510 capable of receiving a first cable (not shown) and a channel 520 capable of receiving a second cable (also not shown). Channel 510 comprises a sidewall 511, a sidewall 512, and a segment 513 bridging sidewall 511 and sidewall 512. Channel 520 comprises sidewall 512, a sidewall 521, and a segment 523 bridging sidewall 512 and sidewall 521. As an example, channel 510 (at least in terms of its dimensions), sidewalls 512 and 521, and segments 513 and 523 can be similar to, respectively, channel 120, sidewalls 112 and 121, and segments 113 and 123, all of which were first shown in FIG. 1. As illustrated, channel 520 is also similar, at least in its dimensions, to channel 120. Sidewall 511 is similar to sidewall 121.

In the illustrated embodiment, cable clip 500 further comprises a tab 501 in channel 510 and a tab 502 in channel 520. Tabs 501 and 502 serve to retain a cable within the respective channels. In one embodiment, tabs 501 and 502 are flexible enough to be deflected when a cable is pushed against them, but stiff enough that a cable will tend not to fall out of the channel unless influenced by an outside force, such as pressure applied by a user of cable clip 500.

FIG. 6 is a front view of a cable clip 600 according to another embodiment of the invention. Cable clip 600 is an example of a cable clip having more than two channels. Another example of such a cable clip is shown in FIG. 7 and described below. As illustrated in FIG. 6, cable clip 600 comprises a channel 610 capable of receiving a first cable (not shown), a channel 620 capable of receiving a second cable (not shown), a channel 650 capable of receiving a third cable (not shown), and a channel 660 capable of receiving a fourth cable (not shown). Channel 610 comprises a sidewall 611, a sidewall 612, and a segment 613 bridging sidewall 611 and sidewall 612. Channel 620 comprises sidewall 612, a sidewall 621, and a segment 623 bridging sidewall 612 and sidewall 621. Channel 650 comprises a sidewall 651, a sidewall 652, and a segment 653 bridging sidewall 651 and sidewall 652. Channel 660 comprises sidewall 652, a sidewall 661, and a segment 663 bridging sidewall 652 and sidewall 661.

Cable clip 600 further comprises an identification region 630 and an identification region 631. As an example, channels 610, 620, 650, and 660 can be similar to channel 110, first shown in FIG. 1. As another example, sidewalls 611, 621, 651, and 661 can be similar to sidewall 111, also first shown in FIG. 1. In one embodiment, sidewalls 621 and 651 are one and the same, and form an elongated or larger version of sidewall 111. Sidewalls 612 and 652 can be similar to sidewall 112, first shown in FIG. 1. Segments 613, 623, 653, and 663 can be similar to segments 113 and/or 123, both of which were first shown in FIG. 1. Identification regions 630 and 631 can be similar to identification region 130, also first shown in FIG. 1.

FIG. 7 is a front view of a cable clip 700 according to another embodiment of the invention. Cable clip 700 is another example of a cable clip having more than two channels. As illustrated in FIG. 7, cable clip 700 comprises a channel 710, a channel 720, a channel 750, a channel 760, a channel 770, and a channel 780, each of which are capable of receiving at least one cable (none of which are shown). As an example, each of channels 710, 720, 750, 760, 770, and 780 can be similar, both in terms of their components and their dimensions, to channel 110, first shown in FIG. 1. For purposes of simplicity and clarity, many of the components of the foregoing channels are presented without references numerals in FIG. 7. Cable clip 700 further comprises an identification region 730, an identification region 731, and an identification region 732, each of which can be similar to identification region 130, first shown in FIG. 1. Cable clip 700 still further comprises a tab 701, which can be similar to tab 501, first shown in FIG. 5.

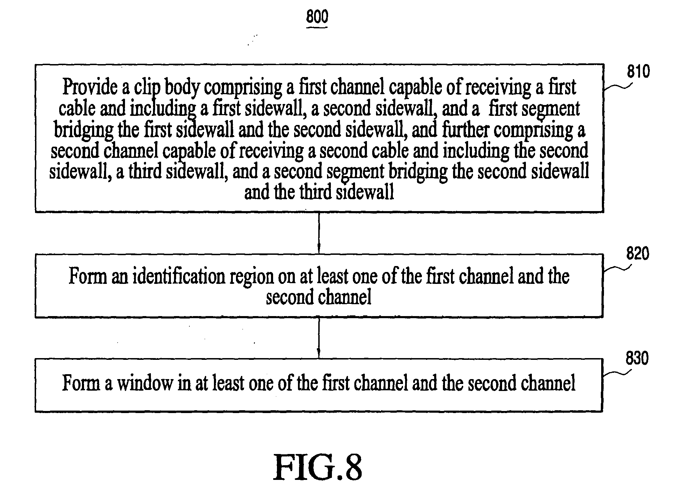

FIG. 8 is a flow chart illustrating a method 800 of manufacturing a cable clip according to an embodiment of the invention. A step 810 of method 800 is to provide a clip body comprising a first channel capable of receiving a first cable and including a first sidewall, a second sidewall, and a first segment bridging the first sidewall and the second sidewall, and further comprising a second channel capable of receiving a second cable and including the second sidewall, a third sidewall, and a second segment bridging the second sidewall and the third sidewall. As an example, the first channel can be similar to channel 110, first shown in FIG. 1, and the second channel can be similar to channel 120, also first shown in FIG. 1. In one embodiment, step 810 comprises forming the clip body in an S-shape, such as the shape shown for cable clip 100, first shown in FIG. 1.

A step 820 of method 800 is to form an identification region on at least one of the first channel and the second channel. As an example, the identification region can be similar to identification region 130, first shown in FIG. 1.

A step 830 of method 800 is to form a window in at least one of the first channel and the second channel. As an example, the window can be similar to window 140, first shown in FIG. 1.

The invention is claimed in the claims. It will be appreciated that the cable clip may be permanently attached to the first cable.

The cable clip may be slidably attached to the first cable and the second cable.

The first channel and the second channel may be two of at least three channels; and each one of the at least three channels may be similar to at least one of the first channel and the second channel.

According to another aspect of the invention, there is provided a cable clip comprising a first open channel capable of receiving a first cable and comprising a first sidewall, a second sidewall, and a first segment bridging the first sidewall and the second sidewall and a second open channel capable of receiving a second cable and comprising the second sidewall, a third sidewall, and a second segment bridging the second sidewall and the third sidewall wherein the second sidewall comprises a first end and a second end opposite the first end. The first segment is adjacent to the first end of the second sidewall. The second segment is adjacent to the second end of the second sidewall. The first segment has a curvature and the first open channel comprises an identification region comprising a substantially flat surface that is adjacent to the first segment and that does not conform to the curvature of the first segment.

There may be a window in at least one of the first open channel and the second open channel. A fastening device may be removably coupled to the cable clip at the window. There may be provided a second identification region at the second open channel. The window may be located at the first open channel and the cable clip may further comprise a second window located in at least one of the second segment and the third sidewall.

The first sidewall may comprise a first portion and a second portion between the first portion and the first segment. The second sidewall may comprise a third portion and a fourth portion between the third portion and the first segment. The first portion and the third portion are separated by a first distance. The second portion and the fourth portion are separated by a second distance and the first distance is less than the second distance.

Although the invention has been described with reference to specific embodiments, it will be understood by those skilled in the art that various changes may be made without departing from the spirit or scope of the invention. Various examples of such changes have been given in the foregoing description. Accordingly, the disclosure of embodiments of the invention is intended to be illustrative of the scope of the invention and is not intended to be limiting. It is intended that the scope of the invention shall be limited only to the extend required by the appended claims. For example, to one of ordinary skill in the art, it will be readily apparent that the cable clip discussed herein may be implemented in a variety of embodiments, and that the foregoing discussion of certain of these embodiments does not necessarily represent a complete description of all possible embodiments. Rather, the detailed description of the drawings, and the drawings themselves, disclose at least one preferred embodiment of the invention, and may disclose alternative embodiments of the invention.

All elements claimed in any particular claim are essential to the invention claimed in that particular claim. Consequently, replacement of one or more claimed elements constitutes reconstruction and not repair. Additionally, benefits, other advantages and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations (i) are not expressly claimed in the claims; and (ii) are or are potentially equivalents of express elements and/or limitations in the claims under the doctrine of equivalents.

## Claims

1. A cable clip comprising:
a first channel 110 capable of receiving a first cable and comprising a first sidewall 111, a second sidewall 112, and a first segment 113 bridging the first sidewall 111 and the second sidewall 112; and
a second channel 120 capable of receiving a second cable and comprising the second sidewall 112, a third sidewall 121, and a second segment 123 bridging the second sidewall 112 and the third sidewall 121,
wherein:
the second sidewall 112 separates the first channel 110 from the second channel 120;
the first channel 110 comprises an identification region 130; and
the second channel 120 contains a window 140 in at least one of the second segment 123 and the third sidewall 121.

2. The cable clip of claim 1 wherein:
the second sidewall 112 comprises a first end 171 and a second end 172 opposite the first end 171;
the first segment 113 is adjacent to the first end 171 of the second sidewall 112; and
the second segment 123 is adjacent to the second end 172 of the second sidewall 112.

3. The cable clip of claims 1 or 2 wherein:
the second sidewall 112 comprises a first end 171 and a second end 172 opposite the first end 171; and
the first segment 113 and the second segment 123 are adjacent to the first end 171 of the second sidewall 112.

4. The cable clip of claim 1, 2, or 3 wherein the second channel 120 comprises a second identification region.

5. The cable clip of any of claims 1 to 4 wherein the identification region 130 comprises a writable surface that is substantially smooth and substantially flat.

6. The cable clip of any of claims 1 to 5 wherein:
the first segment 113 has a curvature;
the writable surface 130 is adjacent to the first segment 113; and
the writable surface 130 does not conform to the curvature.

7. The cable clip of any of claims 1 to 6 wherein the writable surface 130 is raised above the first segment 113.

8. The cable clip of any of claims 1 to 7 wherein:
the first sidewall 111 comprises a first portion and a second portion between the first portion and the first segment 113;
the second sidewall 112 comprises a third portion and a fourth portion between the third portion and the first segment 113;
the first portion and the third portion are separated by a first distance;
the second portion and the fourth portion are separated by a second distance; and
the first distance is less than the second distance.

9. A method of manufacturing a cable clip, the method comprising:
providing a clip body comprising:
a first channel 110 capable of receiving a first cable and comprising a first sidewall, a second sidewall, and a first segment bridging the first sidewall and the second sidewall; and
a second channel 120 capable of receiving a second cable and comprising the second sidewall, a third sidewall, and a second segment bridging the second sidewall and the third sidewall;
forming an identification region 130 on at least one of the first channel and the second channel; and
forming a window 140 in at least one of the first channel and the second channel.

10. The method of claim 9 wherein providing the clip body comprises forming the clip body in an S-shape.
